# FASCICULE DE BREVET EUROPEEN

(11) **EP 1 225 683 B1**
(45) Date de publication et mention de la délivrance du brevet: **11.08.2010**
(21) Numéro de dépôt: 02290114.4
(22) Date de dépôt: 16.01.2002
(51) Int. Cl.: H02N 2/10, H02N 2/14

(54) **Moteur piézo-électrique**
Piezoelektrischer Motor
Piezoelectric motor

(30) Priorité: 17.01.2001 FR 0100601
(43) Date de publication de la demande: 24.07.2002
(73) Titulaire: Sagem Défense Sécurité, 75015 Paris (FR)
(72) Inventeur: Hodar, François, 91400 Orsay (FR)
(74) Mandataire: Novagraaf Technologies

(56) Documents cités:
- EP-A- 0 297 574
- FR-A- 2 345 049
- FR-A- 2 767 980

## Description

La présente invention concerne un moteur piézo-électrique. Un domaine d'application de l'invention est les actionneurs d'avions.

De tels moteurs sont destinés à remplacer les moteurs classiques électromagnétiques, car ceux-ci engendrent des perturbations électromagnétiques gênantes pour l'avionique et les organes électriques de commande de l'avion.

Voyez par exemple FR 2767980 et EP297574. On connaît de tels moteurs piézo-électriques de type PZT pour de petites puissances de l'ordre de quelques watts. Ces moteurs génèrent un fort couple et une faible vitesse de l'ordre de cent tours par minute. Toutefois, ils ne conviennent pas aux plus grandes puissances de l'ordre de plusieurs kilowatts, l'échauffement à ces puissances étant très important et destructif.

En effet, les matériaux piézo-électriques perdent au-delà d'une certaine température leurs propriétés piézo-électriques, à savoir leur capacité à se déformer sous l'action d'un champ électrique, d'une manière similaire à celle des aimants qui perdent leurs propriétés magnétiques au-delà du point de Curie.

L'inventeur a constaté que ce phénomène de dépolarisation se produit lorsque, le composant piézo-électrique se trouvant sur une des branches de son cycle d'hystérésis, la valeur du champ électrique auquel il est soumis se rapproche d'un seuil situé sur cette branche à une certaine distance de la valeur pour laquelle la polarisation s'annule. Et plus la température est élevée, plus cette distance augmente, et plus faible par conséquent est le domaine d'excursion disponible pour soumettre le composant à une tension alternative de commande.

L'invention vise à obtenir un moteur piézo-électrique remédiant à ces inconvénients et fonctionnant de manière satisfaisante sur une large gamme de puissance, et donc de température.

L'objet de l'invention est un moteur piézo-électrique comportant :
- un rotor comportant au moins un disque tournant autour d'un axe ;
- des moyens d'alimentation pour fournir une tension électrique de commande ;
- un stator comportant un jeu d'au moins un organe d'entraînement du disque en rotation, l'organe d'entraînement étant apte à être appliqué suivant une direction normale contre la surface du disque par un organe d'embrayage, et étant apte à être déplacé suivant une direction tangentielle d'entraînement par la déformation d'au moins un élément piézo-électrique apte à être déformé en étant soumis à une variation de ladite tension électrique de commande, **caractérisé en ce que** lesdits moyens d'alimentation sont agencés pour fournir une tension électrique de commande comportant une composante continue de décalage vers l'état de dilatation des éléments piézo-électriques suivant la direction tangentielle.

Ainsi, l'invention prévoit de maintenir les éléments piézo-électriques dans une zone de fonctionnement où ils gardent leur polarisation et une déformation non nulle.

La variation de tension de commande et la tension continue sont telles que la polarisation des éléments piézo-électriques reste supérieure à un seuil non nul.

Suivant une caractéristique, les moyens d'alimentation sont agencés pour fournir une composante continue de la tension de commande telle que la tension de commande garde le même signe.

Afin d'obtenir une plus grande marge de sécurité par rapport à une dépolarisation, les moyens d'alimentation sont agencés pour fournir une composante continue de la tension de commande telle que la tension de commande ne s'annule pas et que sa valeur absolue soit supérieure à un seuil strictement positif.

Afin d'isoler la source de tension continue produisant la composante continue de la tension de commande par rapport à la source produisant la composante variable de la tension, les moyens d'alimentation sont agencés pour fournir la composante continue de la tension de commande à une première borne d'attaque en tension de l'élément piézo-électrique par l'intermédiaire d'une inductance de découplage, et la première borne d'attaque en tension est reliée, par l'intermédiaire d'une capacité de découplage, à une entrée d'attaque par la composante variable de la tension de commande.

Afin de compenser l'énergie réactive générée par l'élément piézo-électrique, une inductance est interposée en parallèle avec l'élément piézo-électrique, sur une entrée d'attaque par la composante variable de tension de commande.

Afin d'obtenir un gain en tension stable dans une plage de fréquences sur l'entrée d'attaque par la composante variable de tension par rapport à une alimentation en tension variable, les moyens d'alimentation sont agencés pour fournir la composante variable de la tension de commande par l'intermédiaire d'un circuit LC série à cette entrée d'attaque.

Suivant une caractéristique, les moyens d'alimentation sont agencés pour fournir une composante variable de la tension de commande sinusoïdale.

Dans un mode de réalisation permettant d'augmenter la puissance du moteur, deux éléments piézo-électriques sont prévus devant et derrière l'organe d'entraînement pour son déplacement tangentiel.

Dans un premier mode de réalisation particulier, permettant d'optimiser la puissance, les moyens d'alimentation sont agencés pour fournir aux éléments piézo-électriques de l'organe d'entraînement des variations de tension sensiblement en opposition de phase, et par exemple de mêmes valeurs absolues, et des composantes continues de tension sensiblement de même signe, par exemple égales. Les éléments piézo-électriques sont alors polarisés dans le même sens.

Dans un autre mode de réalisation particulier, permettant de n'utiliser qu'une seule source de tension variable, les moyens d'alimentation sont agencés pour fournir aux éléments piézo-électriques de l'organe d'entraînement des variations de tension sensiblement en phase, et par exemple égales, et des composantes continues de tension de signe opposé, et par exemple de mêmes valeurs absolues. Les éléments piézo-électriques sont alors polarisés en sens inverse.

Dans un mode de réalisation, améliorant le fonctionnement du moteur, le stator comporte un organe d'entraînement complémentaire de l'autre côté de la surface du disque, en vis-à-vis du premier organe d'entraînement et un organe de précontrainte de l'organe d'entraînement complémentaire dans la direction normale contre la surface du disque.

Afin d'augmenter d'avantage la puissance, plusieurs organes d'entraînement sont répartis sur la surface du disque, les éléments piézo-électriques d'organes d'entraînement voisins étant reliés entre eux par une entretoise.

Un mode de réalisation particulièrement compact et puissant prévoit que le rotor comporte un deuxième disque coaxial au premier disque et que le stator comporte un deuxième jeu d'organes d'entraînement, au moins un organe d'embrayage étant prévu entre les deux disques pour appliquer au moins le premier et le deuxième organe d'entraînement en sens contraire dans la direction normale contre les surfaces des premier et deuxième disques. Il est prévu des premier et deuxième organes d'entraînement complémentaires de l'autre côté de la surface des disques, en vis-à-vis des premier et deuxième organes d'entraînement et des organes de précontrainte des premier et deuxième organes d'entraînement complémentaires dans la direction normale contre la surface des disques.

Un mode de réalisation peu coûteux prévoit que les organes de précontrainte sont formés de ressorts.

L'invention sera mieux comprise à la lumière de la description qui va suivre faite en référence aux dessins, donnés uniquement à titre d'exemple et sur lesquels :
- la figure 1A est une vue schématique en coupe axiale du moteur piézo-électrique suivant l'invention, au repos ;
- la figure 1B est une vue schématique en coupe du moteur piézo-électrique dans un état de fonctionnement ;
- la figure 1C est une vue schématique développée du moteur piézo-électrique;
- la figure 2 est une vue schématique en coupe agrandie d'un organe d'entraînement du stator ;
- la figure 3 montre un diagramme de la déformation et de la polarisation d'un élément piézo-électrique du stator en fonction du champ électrique appliqué ;
- la figure 4 est un schéma électrique montrant les circuits d'attaque en tension de commande d'un élément piézo-électrique.

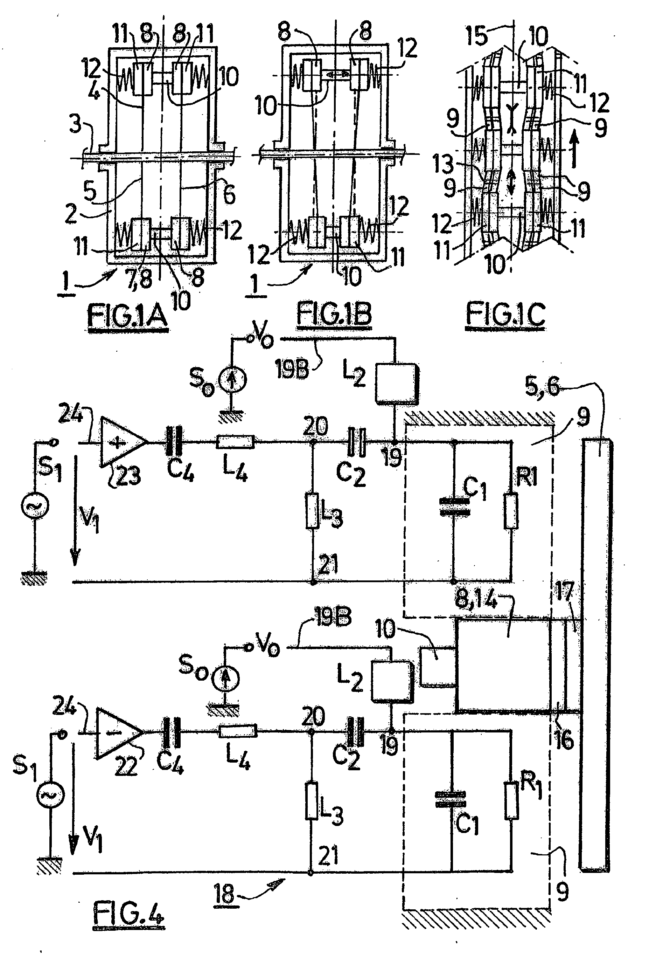

Aux figures 1A, 1B, 1C, le moteur piézo-électrique 1 comporte un carter 2 dans lequel est monté, tournant par rapport à un axe 3 de sortie, un rotor 4. Le rotor 4 comporte deux disques 5, 6 coaxiaux à l'axe 3, solidaires de celui-ci et espacés l'un de l'autre. Dans d'autres réalisations non représentées, un seul disque est prévu.

Le stator 7 enfermé dans le carter 2 comporte, à proximité de la surface des disques 5, 6, des organes 8 d'entraînement en rotation de ceux-ci par rapport à l'axe 3. Les organes 8 d'entraînement sont déplacés suivant une direction tangentielle aux disques 5, 6 par des éléments 9 piézo-électriques disposés contre la surface des organes 8 d'entraînement, à l'avant et à l'arrière suivant la direction tangentielle 15. La direction tangentielle 15 de déplacement des organes 8 d'entraînement est sensiblement parallèle au plan des disques 5, 6, n'est pas concourante avec l'axe 3 et est parallèle à un axe longitudinal des éléments piézo-électriques 9.

Des organes 10 d'embrayage sont prévus sur les organes 8 d'entraînement pour les appliquer suivant des directions normales aux disques 5, 6, contre la surface de ces derniers. Dans les réalisations présentées, les organes 8 d'entraînement du disque 5 et du disque 6 sont prévus en vis-à-vis suivant les directions normales aux disques 5, 6 et entre ceux-ci, et les organes 10 d'embrayage sont prévus dans l'espace compris entre les organes 8 d'entraînement en vis-à-vis.

Des organes 11 d'entraînement complémentaires, aptes à être déplacés tangentiellement par des éléments piézo-électriques 9 sont prévus de l'autre côté des disques 5, 6, en face des organes 8 d'entraînement. Des ressorts 12 de précontrainte des organes 11 d'entraînement complémentaires vers les disques 5, 6 dans la direction normale sont prévus entre le carter 2 et ces organes 11 d'entraînement complémentaires.

La commande des organes 10 d'embrayage est synchronisée avec celle des éléments 9 piézo-électriques, de telle manière que lorsque les organes 10 d'embrayage provoquent un déplacement normal des organes 8 d'entraînement contre la surface des disques 5, 6, ainsi que représenté en haut de la figure 1B, les éléments piézo-électriques 9 de ces organes 8 d'entraînement provoquent un déplacement dans un sens suivant leur direction tangentielle 15 aux disques, afin d'entraîner les disques 5, 6 en rotation dans ce sens. Au contraire, lorsque les organes 10 d'embrayage sont commandés pour ne pas appliquer les organes 8 d'entraînement contre les disques 5, 6 ou pour diminuer la distance entre les organes 8 d'entraînement en vis-à-vis, les éléments piézo-électriques 9 sont commandés pour provoquer un déplacement de ces organes 8 d'entraînement dans l'autre sens dans la direction tangentielle 15, ainsi que représenté au bas de la figure 1B.

Les éléments 9 piézo-électriques sont reliés, à leur extrémité éloignée de leur organe 8 d'entraînement à une entretoise 13, elle-même reliée à l'élément 9 piézo-électrique de déplacement d'un organe d'entraînement 8 voisin ou d'un organe 11 d'entraînement complémentaire voisin, sur chaque face des disques 5, 6, ainsi que représenté à la figure 1C. Les organes d'entraînement 8, 11 sont ainsi répartis sur la périphérie des disques 5, 6. Les éléments piézo-électriques 9 et les organes 10 d'embrayage d'organes d'entraînement 8, 11 voisins sont commandés en alternance en écartement normal des organes 8 et déplacement tangentiel de ceux-ci dans un sens déterminé et en rapprochement normal des organes 8 et déplacement tangentiel dans le sens opposé, ainsi que représenté à la figure 1C.

Les disques 5, 6 présentent une certaine flexibilité dans la direction normale pour se déformer localement en fonction de la pression exercée par les organes d'entraînement 8, 11. Dans des réalisations non représentées, un seul disque 5 ou 6 est prévu sur le rotor 4, ainsi qu'un seul jeu d'organe 8 d'entraînement d'un côté du disque et d'organes 11 d'entraînement complémentaires de l'autre côté du disque.

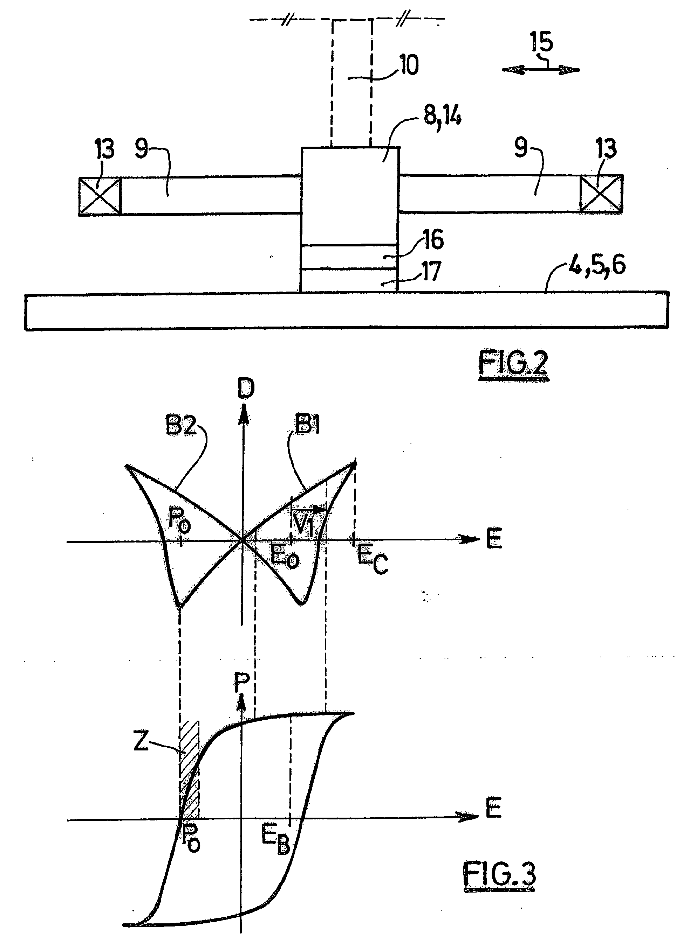

A la figure 2, l'organe 8 d'entraînement comporte une masse 14, sur une face normale de laquelle est appliqué l'organe 10 d'embrayage et sur les faces tangentielles de laquelle sont appliqués respectivement deux éléments piézo-électriques 9 suivant la direction tangentielle 15. Du côté tourné vers le disque 5, la masse 14 est fixée à une couche élastique 16, elle-même fixée à une masselotte 17 comportant une couche tribologique de contact avec la surface du disque 5, 6.

Les éléments 9 piézo-électriques sont commandés par une tension comportant, en plus de la composante variable destinée à provoquer leur variation de longueur dans la direction longitudinale 15 pour déplacer la masse 14, une composante continue non nulle. La composante continue est telle qu'elle décale la tension de commande des éléments piézo-électriques 9 dans le sens de la dilatation de ceux-ci par rapport à une tension nulle. Ainsi, sous composante variable nulle, la tension de commande des éléments piézo-électriques 9 est telle qu'elle provoque une dilatation tangentielle de ceux-ci par rapport à leur état de repos.

A la figure 3, la composante continue est par exemple telle que la tension de commande garde le même signe, de manière à provoquer une dilatation plus ou moins grande de l'élément piézo-électrique 9. Les inventeurs se sont aperçus qu'il existait une zone de perte de polarisation Z, représentée en traits hachurés dans le diagramme de polarisation P en fonction du champ électrique appliqué E au bas de la figure 3, ayant tendance à s'étendre en direction de l'axe vertical P lorsque la température augmente. La composante continue E₀ correspondant à la composante de tension continue de la tension de commande se situe dans le cadran opposé à la zone Z.

La composante variable de tension de commande est par exemple sinusoïdale et la composante continue E₀ est par exemple supérieure à l'amplitude de la composante variable. La tension de commande reste inférieure à une tension de claquage correspondant à un champ de claquage E_{C}.

Pour un élément piézo-électrique 9 au plomb zirconate titanate ayant son axe 3-3 suivant la direction tangentielle 15, le point P₀ d'annulation de polarisation se situe à 1 500 V/mm environ avec une déformation D de- 0,12 %. La largeur de la bande Z de dépolarisation est par exemple de 100 V/mm à 25°C et d'environ 1 500 V/mm à la température critique de 320°C. Le champ électrique de claquage E_{C} est par exemple de 3 500 V/mm pour une déformation D de + 0,12 %. La composante continue E₀ est par exemple de + 750 V/mm et la composante variable d'amplitude de 750 V/mm ou moins.

La commande des éléments piézo-électriques 9 d'un même organe 8 d'entraînement est effectuée de telle manière que l'un se dilate plus, tandis que l'autre se dilate moins. Sous composante variable de tension nulle, les éléments piézo-électriques 9 sont tous dilatés par la composante continue de tension. Bien entendu, les composantes continues de tension peuvent être différentes d'un élément piézo-électrique à l'autre. En particulier, la tension de commande peut être positive ou négative suivant les deux branches respectives B1 ou B2 de la courbe de déformation D de la figure 3.

A la figure 4, chaque élément piézo-électrique 9 est modélisé par une capacité C₁ en parallèle avec une résistance R₁ de fuite, dans la direction tangentielle. Un circuit 18 d'attaque de l'élément piézo-électrique 9 par la tension de commande comprend une inductance L₂ de découplage reliée par une extrémité à une première borne 19 d'attaque en tension de l'élément piézo-électrique 9 et reliée par son autre extrémité à une première entrée 19B d'alimentation en tension continue V₀ de la tension de commande. Une source S₀ d'alimentation en tension continue V₀ est prévue, pouvant être connectée à la première entrée 19B d'alimentation en tension continue.

La première borne 19 d'attaque en tension est reliée à une deuxième entrée 20 d'attaque en tension variable par l'intermédiaire d'une capacité C₂ de découplage.

La deuxième entrée 20 d'attaque en tension variable est reliée à la deuxième borne 21 d'attaque en tension de l'élément piézo-électrique 9 par une inductance L₃ de compensation d'énergie réactive générée par l'élément 9.

La deuxième entrée 20 d'attaque en tension variable est reliée à une extrémité d'un circuit LC série, formé d'une inductance L₄ en série avec une capacité C₄ et relié par son autre extrémité à une entrée 24 d'alimentation en composante variable V₁ de la tension de commande. Le circuit série C₄ L₄ forme avec l'inductance L₃ et la capacité C₁ de l'élément piézo-électrique 9 un filtre d'ordre 4. Le spectre en fréquence de la tension variable V₁ est par exemple tel qu'il se trouve dans le plateau de gain sensiblement constant du filtre. Une source S₁ d'alimentation en tension variable V₁ est prévue, pouvant être connectée à l'entrée 24 d'alimentation en tension variable.

Les éléments piézo-électriques 9 d'un organe 8 d'entraînement sont par exemple commandés par des composantes variables V₁ de tension en opposition de phase. Dans ce cas, des éléments d'entrée 22, 23 déphasés de 180° l'un par rapport à l'autre sont par exemple intercalés sur les deux entrées 24 alimentées par la même source S₁ de tension variable V₁. Une même source d'alimentation S₀ en composante V₀ de tension continue est par exemple reliée aux entrées 19B.

En variante, les éléments piézo-électriques 9 d'un même organe d'entraînement 8 sont attaqués par des tensions continues V₀ opposées et par des composantes variables V₁ de tension en phase, en ayant un point de fonctionnement respectivement sur les branches B1 et B2 selon la figure 3. Dans ce cas, non représenté, des éléments d'entrée déphasés de 180° l'un par rapport à l'autre sont par exemple intercalés sur les deux entrées d'alimentation en tension continue reliées à la même source S₀ de tension continue V₀ et une même source d'alimentation S₁ en composante V₁ de tension variable est par exemple reliée aux entrées d'alimentation en tension variable.

## Revendications

1. Moteur piézo-électrique comportant :
- un rotor (4) comportant au moins un disque (5, 6) tournant autour d'un axe (3) ;
- des moyens (S₀, S₁) d'alimentation pour fournir une tension électrique de commande ;
- un stator (2) comportant un jeu d'au moins un organe (8) d'entraînement du disque (5, 6) en rotation, l'organe (8) d'entraînement étant apte à être appliqué suivant une direction normale contre la surface du disque (5, 6) par un organe (10) d'embrayage et étant apte à être déplacé suivant une direction tangentielle (15) d'entraînement par la déformation d'au moins un élément (9) piézo-électrique apte à être déformé en étant soumis à une variation de ladite tension électrique de commande, **caractérisé en ce que** lesdits moyens (S₀, S₁) d'alimentation sont agencés pour fournir une tension électrique de commande comportant une composante continue (V₀) de décalage vers l'état de dilatation des éléments piézo-électriques (9) suivant la direction tangentielle (15).

2. Moteur piézo-électrique suivant la revendication 1, **caractérisé en ce que** les moyens (S₀, S₁) d'alimentation sont agencés pour fournir une composante continue (V₀) de la tension de commande telle que la tension de commande garde le même signe.

3. Moteur piézo-électrique suivant l'une quelconque des revendications 1 et 2, **caractérisé en ce que** les moyens (S₀, S₁) d'alimentation sont agencés pour fournir une composante continue (V₀) de la tension de commande telle que la tension
de commande ne s'annule pas et que sa valeur absolue soit supérieure à un seuil strictement positif.

4. Moteur piézo-électrique suivant l'une quelconque des revendications 1 à 3, **caractérisé en ce que** les moyens (S₀, S₁) d'alimentation sont agencés pour fournir la composante continue (V₀) de la tension de commande à une première borne (19) d'attaque en tension de l'élément (9) piézo-électrique par l'intermédiaire d'une inductance (L₂) de découplage, et la première borne (19) d'attaque en tension est reliée, par l'intermédiaire d'une capacité (C₂) de découplage, à une entrée (20) d'attaque par la composante variable (V₁) de la tension de commande.

5. Moteur piézo-électrique suivant l'une quelconque des revendications 1 à 4, **caractérisé en ce qu'**une inductance (L₃) est interposée en parallèle avec l'élément (9) piézo-électrique, sur une entrée (20) d'attaque par la composante variable (V₁) de la tension de commande.

6. Moteur piézo-électrique suivant l'une quelconque des revendications 1 à 5, **caractérisé en ce que** les moyens (S₀, S₁) d'alimentation sont agencés pour fournir la composante variable (V₁) de la tension de commande à une entrée (20) d'attaque de l'élément (9) piézo-électrique par l'intermédiaire d'un circuit LC série (L₄, C₄).

7. Moteur piézo-électrique suivant l'une quelconque des revendications 1 à 6, **caractérisé en ce que** les moyens (S₀, S₁) d'alimentation sont agencés pour fournir une composante variable (V₁) sinusoïdale de la tension de commande.

8. Moteur piézo-électrique suivant l'une quelconque des revendications 1 à 7, **caractérisé en ce que** deux éléments (9) piézo-électriques sont prévus devant et derrière l'organe (8) d'entraînement pour son déplacement suivant la direction tangentielle (15).

9. Moteur piézo-électrique suivant la revendication 8, **caractérisé en ce que** les moyens d'alimentation sont agencés pour fournir aux éléments piézo-électriques (9) de l'organe d'entraînement (8) des variations (V₁) de tension sensiblement en opposition de phase, et par exemple de mêmes valeurs absolues, et des composantes continues (V₀) de tension sensiblement de même signe, par exemple égales.

10. Moteur piézo-électrique suivant la revendication 8, **caractérisé en ce que** les moyens d'alimentation sont agencés pour fournir aux éléments piézo-électriques (9) de l'organe (8) d'entraînement des variations (V₁) de tension sensiblement en phase, et par exemple égales, et des composantes continues (V₀) de tension de signe opposé, et par exemple de mêmes valeurs absolues.

11. Moteur piézo-électrique suivant l'une quelconque des revendications 1 à 10, **caractérisé en ce que** le stator (2) comporte un organe (11) d'entraînement complémentaire de l'autre côté de la surface du disque (5, 6), en vis-à-vis du premier organe (8) d'entraînement et un organe (12) de précontrainte de l'organe (11) d'entraînement complémentaire dans la direction normale contre la surface du disque (5, 6).

12. Moteur piézo-électrique suivant l'une quelconque des revendications 1 à 11, **caractérisé en ce que** plusieurs organes (8) d'entraînement sont répartis sur la surface du
disque (5, 6), les éléments piézo-électriques (9) d'organe (8) d'entraînement voisins étant reliés entre eux par une entretoise (13).

13. Moteur piézo-électrique suivant l'une quelconque des revendications 1 à 12, **caractérisé en ce que** le rotor (2) comporte un deuxième disque (6) coaxial au premier disque (5) et le stator (2) comporte un deuxième jeu d'organes (8) d'entraînement, au moins un organe d'embrayage (10) étant prévu entre les deux disques (5, 6) pour appliquer au moins le premier et le deuxième organe (8) d'entraînement en sens contraire dans la direction normale (15) contre les surfaces des premier et deuxième disques (5, 6), et il est prévu des premier et deuxième organes (11) d'entraînement complémentaires de l'autre côté de la surface des disques (5, 6) en vis-à-vis des premier et deuxième organes (8) d'entraînement et des organes (12) de précontrainte des premier et deuxième organes (11) d'entraînement complémentaires dans la direction normale (15) contre la surface des disques (5, 6).

14. Moteur piézo-électrique suivant l'une quelconque des revendications 11 et 13, **caractérisé en ce que** les organes (12) de précontrainte sont formés de ressorts.

## Claims

1. A piezoelectric motor comprising:
- a rotor (4) comprising at least one disc (5, 6) rotating about a spindle (3);
- supply means (S₀, S₁) for supplying an electric control voltage;
- a stator (2) comprising a set of at least one member (8) for driving the disc (5, 6) in rotation, the drive member (8) being able to be applied in a normal direction against the surface of the disc (5, 6) by an engagement member (10) and able to be moved in a tangential driving direction (15) by the deformation of at least one piezoelectric element (9) able to be deformed whilst being subjected to a variation in the said electric control voltage, **characterised in that** the said supply means (S₀, S₁) are arranged so as to supply an electric control voltage having a DC component (V₀) of shift towards the expansion state of the piezoelectric elements (9) in the tangential direction (15).

2. A piezoelectric motor according to Claim 1, **characterised in that** the supply means (S₀, S₁) are arranged to supply a continuous component (V₀) of the control voltage such that the control voltage keeps the same sign.

3. A piezoelectric motor according to either one of Claims 1 and 2, **characterised in that** the supply means (S₀, S₁) are arranged to supply a continuous component (V₀) of the control voltage such that the control voltage is not cancelled out and its absolute value is greater than a strictly positive threshold.

4. A piezoelectric motor according to any one of Claims 1 to 3, **characterised in that** the supply means (S₀, S₁) are arranged to supply the continuous component (V₀) of the control voltage at a first terminal (19) for supplying voltage to the piezoelectric element (9) by means of a decoupling inductor (L₂), and the first voltage supply terminal (19) is connected, by means of a decoupling capacitor (C₂), to an input (20) for supply by the variable component (V₁) of the control voltage.

5. A piezoelectric motor according to any one of Claims 1 to 4, **characterised in that** an inductor (L₃) is interposed in parallel with the piezoelectric element (9), at an input (20) for supply by the variable component (V₁) of the control voltage.

6. A piezoelectric motor according to any one of Claims 1 to 5, **characterised in that** the supply means (S₀, S₁) are arranged to supply the variable component (V₁) of the control voltage to an input (20) supplying the piezoelectric element (9) by means of a serial LC circuit (L₄, C₄).

7. A piezoelectric motor according to any one of Claims 1 to 6, **characterised in that** the supply means (S₀, S₁) are arranged to supply a sinusoidal variable component (V₁) of the control voltage.

8. A piezoelectric motor according to any one of Claims 1 to 7, **characterised in that** two piezoelectric elements (9) are provided in front of and behind the drive member (8) for its movement in the tangential direction (15).

9. A piezoelectric motor according to Claim 8, **characterised in that** the supply means are arranged to supply to the piezoelectric elements (9) of the drive member (8) voltage variations (V₁) substantially in phase opposition, and for example with the same absolute values, and continuous voltage components (V₀) substantially with the same sign, for example equal.

10. A piezoelectric motor according to Claim 8, **characterised in that** the supply means are arranged to supply to the piezoelectric elements (9) of the drive member (8) voltage variations (V₁) substantially in phase, and for example equal, and continuous voltage components (V₀) of opposite sign, and for example with the same absolute values.

11. A piezoelectric motor according to any one of Claims 1 to 10, **characterised in that** the stator (2) has a complementary drive member (11) on the other side of the surface of the disc (5, 6), opposite the first drive member (8), and a member (12) for prestressing the complementary drive member (11) in the normal direction against the surface of the disc (5, 6).

12. A piezoelectric motor according to any one of Claims 1 to 11, **characterised in that** several drive members (8) are distributed over the surface of the disc (5, 6), the piezoelectric elements (9) of adjacent drive members (8) being connected together by a strut (13).

13. A piezoelectric motor according to any one of Claims 1 to 12, **characterised in that** the rotor (2) has a second disc (6) coaxial with the first disc (5) and the stator (2) has a second set of drive members (8), at least one engagement member (10) being provided between the two discs (5, 6) in order to apply at least the first and second drive members (8) in opposite directions in the normal direction (15) against the surfaces of the first and second discs (5, 6), and first and second complementary drive members (11) are provided on the other side of the surface of the discs (5, 6) opposite the first and second drive members (8) and members (12) for prestressing the first and second complementary drive members (11) in the normal direction (15) against the surface of the discs (5, 6).

14. A piezoelectric motor according to either one of Claims 11 and 13, **characterised in that** the prestressing members (12) are formed by springs.

## Patentansprüche

1. Piezoelektrischer Motor mit :
- einem Rotor (4) mit mindestens einer sich um eine Achse (3) drehenden Scheibe (5, 6);
- Versorgungsmitteln (S0, S1), um eine elektrische Steuerspannung zu liefern;
- einem Stator (2) mit einem Satz von mindestens einem Rotationsantriebsorgan (8) der Scheibe (5, 6), wobei das Antriebsorgan (8) von einem Kupplungsorgan (10) nach einer normalen Richtung gegen die Oberfläche der Scheibe (5, 6) gedrückt werden und nach einer tangentialen Antriebsrichtung (15) verschoben werden kann, durch die Verformung mindestens eines piezoelektrischen Elements (9), das unter einer Schwankung der besagten elektrischen Steuerspannung verformbar ist, **dadurch gekennzeichnet, dass** die besagten Versorgungsmittel (S0, S1) vorgesehen sind, um eine elektrische Steuerspannung zu liefern, die eine kontinuierliche Komponente (V0) für die Verschiebung in den Dehnungszustand der piezoelektrischen Elemente (9) nach der tangentialen Richtung (15) umfasst.

2. Piezoelektrischer Motor nach Anspruch 1, **dadurch gekennzeichnet, dass** die Versorgungsmittel (S0, S1) vorgesehen sind, um eine kontinuierliche Komponente (V0) der Steuerspannung zu liefern, so dass die Steuerspannung das gleiche Vorzeichen behält.

3. Piezoelektrischer Motor nach einem der Ansprüche 1 und 2, **dadurch gekennzeichnet, dass** die Versorgungsmittel (S0, S1) vorgesehen sind, um eine kontinuierliche Komponente (V0) der Steuerspannung zu liefern, so dass die Steuerspannung sich nicht aufhebt und ihr Absolutwert über einem unbedingt positiven Grenzwert liegt.

4. Piezoelektrischer Motor nach einem der Ansprüche 1 bis 3, **dadurch gekennzeichnet, dass** die Versorgungsmittel (S0, S1) vorgesehen sind, um die kontinuierliche Komponente (V0) der Steuerspannung über eine Entkopplungsinduktanz (L2) an eine erste Spannungsbeaufschlagungsklemme (19) des piezoelektrischen Elements (9) zu liefern, und dass die erste Spannungsbeaufschlagungsklemme (19) über eine Entkopplungskapazität (C2) mit einem Beaufschlagungseingang (20) für die variable Komponente (V1) der Steuerspannung verbunden ist.

5. Piezoelektrischer Motor nach einem der Ansprüche 1 bis 4, **dadurch gekennzeichnet, dass** eine Induktanz (L3) parallel mit dem piezoelektrischen Element (9) auf einem Beaufschlagungseingang (20) für die variable Komponente (V1) der Steuerspannung zwischengeschaltet ist.

6. Piezoelektrischer Motor nach einem der Ansprüche 1 bis 5, **dadurch gekennzeichnet, dass** die Versorgungsmittel (S0, S1) vorgesehen sind, um die variable Komponente (V1) der Steuerspannung über eine serielle LC-Schaltung (L4, C4) an einen Beaufschlagungseingang (20) des piezoelektrischen Elements (9) zu liefern.

7. Piezoelektrischer Motor nach einem der Ansprüche 1 bis 6, **dadurch gekennzeichnet, dass** die Versorgungsmittel (S0, S1) vorgesehen sind, um eine sinusförmige variable Komponente (V1) der Steuerspannung zu liefern.

8. Piezoelektrischer Motor nach einem der Ansprüche 1 bis 7, **dadurch gekennzeichnet, dass** die beiden piezoelektrischen Elemente (9) vor und hinter dem Antriebsorgan (8) für die Verschiebung desselben in die tangentiale Richtung (15) vorgesehen sind.

9. Piezoelektrischer Motor nach Anspruch 8, **dadurch gekennzeichnet, das** die Versorgungsmittel vorgesehen sind, um den piezoelektrischen Elementen (9) des Antriebsorgans (8) etwa phasengegenläufige Spannungsschwankungen (V1), und beispielsweise mit gleichen Absolutwerten, sowie kontinuierliche Spannungskomponenten (V0) mit etwa gleichen Vorzeichen, beispielsweise gleichen, zu liefern.

10. Piezoelektrischer Motor nach Anspruch 8, **dadurch gekennzeichnet, dass** die Versorgungsmittel vorgesehen sind, um den piezoelektrischen Elementen (9) des Antriebsorgans (8) etwa phasengleiche Spannungsschwankungen (V1), und beispielsweise gleiche, sowie kontinuierliche Spannungskomponenten (V0) mit entgegen gesetztem Vorzeichen, und beispielsweise mit gleichen Absolutwerten zu liefern.

11. Piezoelektrischer Motor nach einem der Ansprüche 1 bis 10, **dadurch gekennzeichnet, dass** der Stator (2) ein Antriebsorgan (11) umfasst, das die andere Seite der Scheibenoberfläche (5, 6) ergänzt und gegenüber dem ersten Antriebsorgan (8) angeordnet ist, sowie ein Vorspannungsorgan (12) des ergänzenden Antriebsorgans (11) in der normalen Richtung gegen die Oberfläche der Scheibe (5, 6).

12. Piezoelektrischer Motor nach einem der Ansprüche 1 bis 11, **dadurch gekennzeichnet, dass** mehrere Antriebsorgane (8) über die Oberfläche der Scheibe (5, 6) verteilt sind, wobei die benachbarten piezoelektrischen Elemente (9) des Antriebsorgans (8) über einen Steg (13) miteinander verbunden sind.

13. Piezoelektrischer Motor nach einem der Ansprüche 1 bis 12, **dadurch gekennzeichnet, dass** der Rotor (2) eine zweite, koaxial zur ersten Scheibe (5) angeordnete Scheibe (6) und der Stator (2) einen zweiten Satz von Antriebsorganen (8) umfasst, wobei mindestens ein Kupplungsorgan (10) zwischen den beiden Scheiben (5, 6) vorgesehen ist, um mindestens das erste und das zweite Antriebsorgan (8) in der der normalen Richtung (15) entgegen gesetzten Richtung gegen die Oberfläche der ersten und der zweiten Scheibe (5, 6) zu drücken, und dass ein erstes und ein zweites die andere Seite der Oberfläche der Scheiben (5, 6) ergänzendes Antriebsorgan (11) gegenüber dem ersten und dem zweiten Antriebsorgan (8) vorgesehen ist, sowie Vorspannungsorgane (12) des ersten und des zweiten zusätzlichen Antriebsorgans (11) in der normalen Richtung (15) gegen die Oberfläche der Scheiben (5, 6).

14. Piezoelektrischer Motor nach einem der Ansprüche 11 und 13, **dadurch gekennzeichnet, dass** die Vorspannungsorgane (12) als Federn ausgebildet sind.
